# EUROPEAN PATENT APPLICATION

(11) **EP 4 701 088 A1**
(43) Date of publication of application: **25.02.2026**
(21) Application number: 24806130.1
(22) Date of filing: 22.02.2024
(51) Int. Cl.: H04B 1/04

(54) **TRANSMIT POWER ADJUSTMENT METHOD, AND TERMINAL, STORAGE MEDIUM AND ELECTRONIC APPARATUS**

(30) Priority: 12.05.2023 CN 202310539631
(71) Applicant: ZTE CORPORATION, Shenzhen, Guangdong 518057 (CN)
(72) Inventor: JIN, Haibing, Shenzhen, Guangdong 518057 (CN)
(74) Representative: Chimini, Francesco
(86) International application number: PCT/CN2024/078169
(87) International publication number: WO 2024/234769

(57) **Abstract**

Provided in the embodiments of the present disclosure are a transmit power adjustment method, and a terminal, a storage medium and an electronic apparatus. The method comprises: acquiring a carrier to noise power spectrum density ratio of a main receiving antenna; and adjusting uplink signal transmit power according to the carrier to noise power spectrum density ratio.

## Description

### Cross-Reference to Related Application

The present disclosure is based on and claims priority to Chinese Patent Application No. CN202310539631.X filed on May 12, 2023 and entitled "Transmit Power Adjustment Method, and Terminal, Storage Medium and Electronic Apparatus", the disclosure of which is incorporated herein by reference in its entirety.

### Technical Field

The present disclosure relates to the field of communications, and in particular, to a transmit power adjustment method, and a terminal, a storage medium and an electronic apparatus.

### Background

A satellite communication system includes three parts: a satellite segment, a ground segment, and a user segment. Typical scenarios for satellite communication include areas where it is impossible to build base stations or where base stations are damaged, such as continuous coverage in remote mountainous areas, deserts, oceans, and forests, or emergency communication in the event of disasters when base stations are damaged.

Currently, satellites in the sky are categorized by orbital altitudes into Low Earth Orbit Satellites (LEO), Middle Earth Orbit Satellites (MEO), Geostationary Earth Orbit Satellites (GEO), and High Elliptical Orbit Satellites (REO). LEO satellites have an orbital height between 300km and 1500km, orbiting the Earth. MEO satellites have an orbital height between 7000km and 25000km. GEO satellites are geostationary orbit satellites at a fixed height of 35786km; for example, BeiDou-3 Short Message Satellites, International Maritime Satellites, and TianTong-1 Satellites are all GEO satellites. HEO satellites have an orbital height between 400km and 50000km, orbiting the Earth in elliptical orbits. The 3rd Generation Partnership Project (3GPP) R17 version defines the standardization of satellite communication networks.

Currently, the design of satellite communication for terminal equipment mainly faces the following issues: satellites are located hundreds, thousands, or even tens of thousands of kilometers away from the ground, and due to the long distance, attenuation of wireless signals of the terminal equipment is significant, hence satellite communication has higher standards for the hardware of the terminal equipment in terms of transmission and reception; to ensure communication reliability, terminal equipment needs to transmit at maximum power, consuming a large amount of power; satellites use circularly polarized antennas, while antennas of terminal equipment are linearly polarized, resulting in a 3dB polarization loss when receiving circularly polarized signals from satellites, thus satellite communication has higher requirements for the receiving antennas in satellite communication; in addition, satellite communication also faces various issues such as high transmission delay, larger cell radius, Doppler frequency shift, and mobility management.

In summary, there is no good solution to address the problem in the related art that terminal equipment in satellite communication continuously transmits signals at maximum power, leading to high power consumption.

### Summary

Embodiments of the present disclosure provide a transmit power adjustment method, and a terminal, a storage medium and an electronic apparatus, which may at least solve the problem in the related art that terminal equipment in satellite communication continuously transmits signals at maximum power, leading to high power consumption.

According to an embodiment of the present disclosure, provided is a transmit power adjustment method applied to a terminal. The transmit power adjustment method includes: acquiring a carrier-to-noise spectral density ratio of a primary receiving antenna; and adjusting an uplink signal transmit power according to the carrier-to-noise spectral density ratio.

According to another embodiment of the present disclosure, provided is a terminal. The terminal includes: a primary receiving antenna, configured to receive a downlink satellite signal; a satellite signal processing chip, configured to acquire a carrier-to-noise spectral density ratio of the primary receiving antenna, and control to adjust an uplink signal transmit power of a transmitting antenna according to the carrier-to-noise spectral density ratio; and a power amplifier, configured to adjust the uplink signal transmit power under the control of the satellite signal processing chip.

According to another embodiment of the present disclosure, also provided is a computer-readable storage medium. The computer-readable storage medium stores a computer program, and the computer program, when run by a processor, causes the processor to execute the operations in any one of the foregoing method embodiments.

According to another embodiment of the present disclosure, also provided is an electronic apparatus, including a memory and a processor, wherein the memory stores a computer program, and the processor is configured to run the computer program so as to execute the operations in any one of the method embodiments.

### Brief Description of the Drawings

Fig. 1 is a schematic diagram of a hardware structure of a transmit power adjustment method according to an embodiment of the present disclosure;
Fig. 2 is a flowchart of a transmit power adjustment method according to an embodiment of the present disclosure;
Fig. 3 is a flowchart of a receiving antenna adjustment method according to an embodiment of the present disclosure;
Fig. 4 is a schematic structural diagram of a satellite communication terminal according to an embodiment of the present disclosure;
Fig. 5 is a schematic structural diagram of an uplink channel of a satellite communication terminal according to an embodiment of the present disclosure;
Fig. 6 is a schematic structural diagram of a downlink channel of a satellite communication terminal according to an embodiment of the present disclosure;
Fig. 7 is a schematic structural block diagram of a receiving channel module according to an embodiment of the present disclosure;
Fig. 8 is a schematic diagram of an overall structure of a satellite communication terminal according to an embodiment of the present disclosure; and
Fig. 9 is a schematic block diagram of a transmit power adjustment apparatus according to an embodiment of the present disclosure.

### Detailed Description of the Embodiments

The embodiments of the present disclosure will be described below in detail with reference to the accompanying drawings and in conjunction with embodiments.

It should be noted that, terms such as "first" and "second" in the description, claims, and accompanying drawings of the present disclosure are used to distinguish similar objects, but are not necessarily used to describe a specific sequence or order.

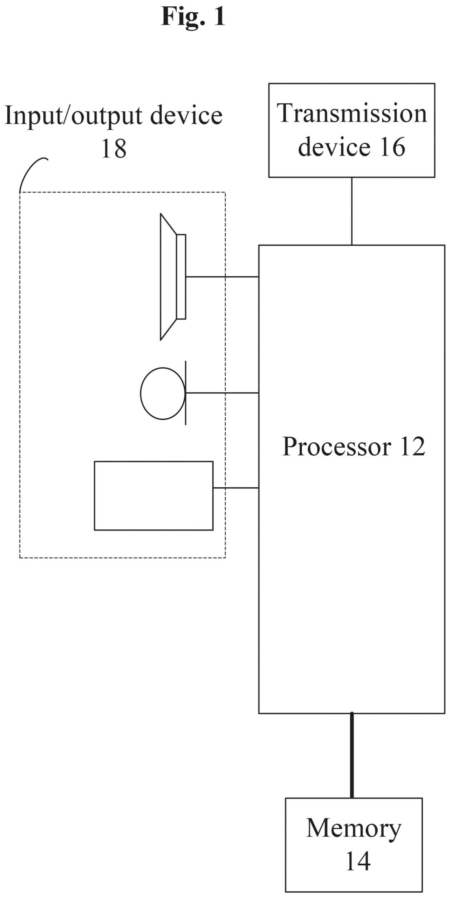

The method embodiments provided in the embodiments of the present disclosure may be executed in a mobile terminal, a computer terminal or a similar computing device. Taking the execution on a mobile terminal as an example, Fig. 1 is a schematic diagram of a hardware structure of a transmit power adjustment method according to an embodiment of the present disclosure. As shown in Fig. 1, a hardware board may include one or more (only one is shown in Fig. 1) processors 12 (the one or more processors 12 may include but are not limited to a processing apparatus such as a microprocessor (MCU) or a programmable logic device) and a memory 14 configured to store data. The mobile terminal may further include a transmission device 16 for a communication function and an input/output device 18. Those having ordinary skill in the art may understand that the structure shown in Fig. 1 is merely exemplary, which does not limit the structure of the foregoing mobile terminal. For example, the mobile terminal may further include more or fewer components than shown in Fig. 1, or have a different configuration from that shown in Fig. 1.

The memory 14 may be used for storing a computer program, for example, a software program and a module of application software, such as a computer program corresponding to the transmit power adjustment method in the embodiments of the present disclosure. The one or more processors 12 may execute various functional applications and the transmit power adjustment method by running the computer program stored in the memory 14, i.e., realizing the described method. The memory 14 may include a high-speed random access memory, and may also include a non-volatile memory, such as one or more magnetic storage devices, flash memory, or other non-volatile solid-state memory. In some embodiments, the memory 14 may further include a memory that is remotely located with respect to the one or more processors 12, and the remote memory may be connected to the mobile terminal over a network. Examples of such networks include, but are not limited to, the Internet, intranets, local area networks, mobile communication networks, and combinations thereof.

The transmission device 16 is used to receive or transmit data via a network. Specific examples of the described network may include a wireless network provided by a communication provider. In an embodiment, the transmission device 16 includes a Network Interface Controller (NIC) that may be coupled to other network devices via a base station to communicate with the Internet. In an embodiment, the transmission device 16 may be a Radio Frequency (RF) module for communicating wirelessly with the Internet.

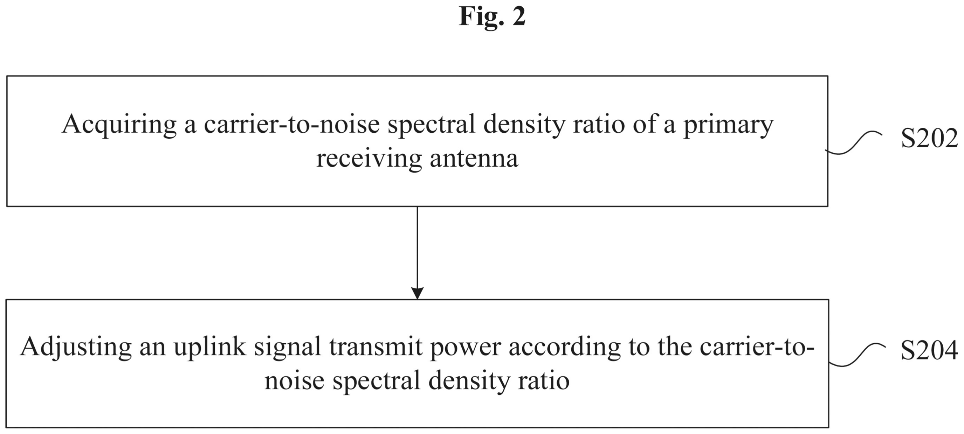

An embodiment of the present disclosure provides a transmit power adjustment method. Fig. 2 is a flowchart of a transmit power adjustment method according to an embodiment of the present disclosure. As shown in Fig. 2, the transmit power adjustment method may include the following operations S202 and S204.

In operation S202, a carrier-to-noise spectral density ratio of a primary receiving antenna is acquired.

In operation S204, an uplink signal transmit power is adjusted according to the carrier-to-noise spectral density ratio.

In this embodiment, the carrier-to-noise spectral density ratio (also referred to as Carrier-to-Noise Spectral Density Ratio, which is abbreviated as CN0 or C/N0) is a ratio of a carrier power to a noise power spectral density. A Signal-Noise Ratio (SNR) is used in the related art to evaluate a signal strength, but this parameter is related to the signal bandwidth. Satellite constellations in the related art are diverse, such as the Global Positioning System (GPS), Beidou, GLONASS, Galileo, etc., and their signal bandwidths vary significantly. Using the SNR is not conducive to comparing the performance of different satellite systems. In contrast, the carrier-to-noise spectral density ratio (CN0) is independent of bandwidth and is more favorable for comparing the performance across different systems. Therefore, in the embodiments of the present disclosure, the magnitude of CN0 is used to characterize the strength of the received signal. For a fixed communication channel, the larger the received CN0, the less the channel attenuation, and the stronger the received signal strength. Conversely, the smaller the received CN0, the greater the channel attenuation, and the weaker the received signal strength.

In the related art, to ensure communication reliability, the uplink channel transmits at maximum power continuously, without a dynamic adjustment process for power, leading to high power consumption and a significant reduction in device endurance over time. In the embodiments of the present disclosure, through operations S202 to S204, dynamic adjustment of the uplink signal transmit power of the satellite terminal equipment can be achieved. This reduces the power consumption of the terminal equipment while ensuring the success rate of uplink signal transmission, thereby enhancing the endurance of the terminal equipment.

In an exemplary embodiment, operation S202 can continuously monitor the CN0 of the primary receiving antenna, or monitor the CN0 at intervals of preset time or communication occurrences, and thereafter determine the changes in signal strength and satellite distance based on the variation (increase or decrease) of the CN0 values between two adjacent measurements.

In an exemplary embodiment, operation S204 may include: adjusting the uplink signal transmit power from P1 to P2 in a case where the carrier-to-noise spectral density ratio decreases, wherein P1 is less than P2; or adjusting the uplink signal transmit power from P1 to P3 in a case where the carrier-to-noise spectral density ratio increases, wherein P1 is greater than P3.

In an exemplary embodiment, operation S204 may include: determining a transmission success rate of uplink information; and adjusting the uplink signal transmit power according to the carrier-to-noise spectral density ratio and the transmission success rate.

In an exemplary embodiment, the operation of determining the transmission success rate of the uplink information may include the following operations S2041 to S2044.

In operation S2041, the number of transmissions of the uplink information is counted within a preset time period or a preset number of communications;

In operation S2042, acknowledgement characters returned by a satellite after receiving the uplink information are received;

In operation S2043, the number of successes of the uplink information is counted according to the acknowledgement characters;

In operation S2044, a ratio of the number of successes to the number of transmissions of the uplink information is determined as the transmission success rate.

In an exemplary embodiment, the operation of adjusting the uplink signal transmit power according to the carrier-to-noise spectral density ratio and the transmission success rate may include at least one of the following operations S2045 and S2046.

In operation S2045, the uplink signal transmit power is adjusted from P1 to P2 in a case where the carrier-to-noise spectral density ratio decreases and the transmission success rate is less than a preset value, wherein P1 is less than P2.

In operation S2046, the uplink signal transmit power is adjusted from P1 to P3 in a case where the carrier-to-noise spectral density ratio increases and the transmission success rate is greater than the preset value, wherein P1 is greater than P3.

In an exemplary embodiment, the preset value of the transmission success rate may be set according to an actual transmission condition of uplink information. In an exemplary embodiment, the preset value may also be based on a range of acceptable transmission success rates for a user, and this preset value is typically a lower limit of the range of acceptable transmission success rates.

In an exemplary embodiment, adjusting the uplink signal transmit power according to the carrier-to-noise spectral density ratio and the transmission success rate may further include: adjusting the uplink signal transmit power from P1 to P2 in a case where the carrier-to-noise spectral density ratio decreases and the transmission success rate decreases; or, adjusting the uplink signal transmit power from P1 to P3 in a case where the carrier-to-noise spectral density ratio increases and the transmission success rate increases.

In this embodiment, the change (increase or decrease) of the carrier-to-noise spectral density ratio is obtained by comparing a latest carrier-to-noise spectral density ratio with a previous carrier-to-noise spectral density ratio.

In this embodiment, P1 is the current uplink signal transmit power, and specific values of P2 and P3 are not limited in the present disclosure.

In the embodiments of the present disclosure, the transmit power adjustment method takes into account both the transmission success rate and the magnitude of CN0 to balance the reliability of uplink communication and power consumption. If only changes in CN0 are considered without regard to the transmission success rate, there may be situations where CN0 decreases but the transmission success rate does not show a significant change; increasing power in such cases would result in unnecessary additional power consumption. Conversely, if only the transmission success rate is considered without regard to the magnitude of CN0, blind adjustments to power may be made due to the inherent randomness in transmission success rates, leading to wasteful power consumption or a degradation in the quality and reliability of uplink communication.

In an exemplary embodiment, operation S2045 may include: adjusting the uplink signal transmit power from P1 to P2 by increasing an input power of a power amplifier.

In an exemplary embodiment, operation S2046 may include: adjusting the uplink signal transmit power from P1 to P3 by decreasing the input power of the power amplifier.

Furthermore, the increase or decrease of the input power may be carried out in a stepwise manner, that is, each adjustment increases or decreases a preset power value. After each adjustment, an output power feedback from the power amplifier may be compared with the preset target output power, or the power amplifier may be adjusted multiple times based on the transmission success rate and the CN0 value after each adjustment until final completion of the adjustment of the uplink signal transmit power.

In an exemplary embodiment, the power amplifier used by the terminal equipment may be a high-power amplifier with linear amplification and constant gain. Therefore, it is possible to directly reduce or increase the transmit power (i.e., the output power of the power amplifier) by decreasing or increasing the input power of the power amplifier.

Additionally, in the embodiments of the present disclosure, the Power Amplifier (PA) has a gain of at least 40dB, an output power and saturation power of at least 41dBm, a Power Added Efficiency (PAE) of at least 40%, an Error Vector Magnitude (EVM) of approximately 3%, and a maximum input power of at least 5dBm.

In an exemplary embodiment, after operation S204, the transmit power adjustment method may further include: determining a transmission success rate of uplink information; in a case where the transmission success rate is greater than or equal to a preset value, determining that adjustment of the uplink signal transmit power succeeds; or in a case where the transmission success rate is less than the preset value, determining that the adjustment of the uplink signal transmit power fails, and continuing to adjust the uplink signal transmit power.

In this embodiment of the present disclosure, the preset value is typically the lower limit of the range of acceptable transmission success rates for the user.

In an exemplary embodiment of the present disclosure, the transmission success rate of the uplink information may be periodically determined at intervals of preset time or preset number of communications; further, the adjustment of the uplink signal transmit power may also be periodic, with each period including a preset time or a preset number of communications.

In an exemplary embodiment, the operation of continuing to adjust the uplink signal transmit power may be implemented by any one of the following adjustment methods: adjusting the uplink signal transmit power according to the transmission success rate; or adjusting the uplink signal transmit power according to the carrier-to-noise spectral density ratio; or adjusting the uplink signal transmit power according to the carrier-to-noise spectral density ratio and the transmission success rate.

In an exemplary embodiment, in a case where it is determined that the adjustment of the uplink signal transmit power fails, the operation of continuing to adjust the uplink signal transmit power may be implemented by any one of the following adjustment methods by any one of the following adjustment methods: adjusting the uplink signal transmit power according to the transmission success rate; or adjusting the uplink signal transmit power according to the carrier-to-noise spectral density ratio; or adjusting the uplink signal transmit power according to the carrier-to-noise spectral density ratio and the transmission success rate.

Further, the operation of continuing to adjust the uplink signal transmit power may be implemented with reference to the operations discussed in any one of the embodiments for the foregoing operation S204. For example, in a case where the carrier-to-noise spectral density ratio decreases, the uplink signal transmit power is adjusted from P1 to P2, wherein P1 is less than P2; or, in a case where the carrier-to-noise spectral density ratio increases, the uplink signal transmit power is adjusted from P1 to P3, wherein P1 is greater than P3.

In an exemplary embodiment of the present disclosure, when adjusting power by a step value, it is necessary to determine whether each adjustment is successful after completion of the adjustment, and continue to adjust the power based on that step value if the adjustment fails.

In an exemplary embodiment, the transmit power adjustment method may further include: acquiring an output power fed back by a power amplifier; and determining an adjustment manner for next adjustment of the uplink signal transmit power according to the output power and a preset target output power range, wherein the adjustment manner includes increasing the uplink signal transmit power and decreasing the uplink signal transmit power.

In an exemplary implementation of the present disclosure, the target output power range may be set based on a environment in which the terminal equipment is located, the CN0 value, a transmission success rate, and historical adjustment data of the power amplifier, and different target output power ranges can be set for different scenarios, such as setting a higher target output power range in adverse environments. Furthermore, the satellite communication chip may directly adjust the input power of the power amplifier, and the feedback from the power amplifier can inform the satellite communication chip of the actual adjustment effects. In cases where the output power is less than the preset target output power range, it may be determined that the next adjustment is to increase the uplink signal transmit power (by increasing the input power); and in cases where the output power is greater than the preset target output power range, it may be determined that the next adjustment is to decrease the uplink signal transmit power (by decreasing the input power).

In an exemplary embodiment of the present disclosure, the satellite communication chip may employ a stepwise adjustment method to increase or decrease the input power. After each adjustment, it is necessary to determine whether a further adjustment is needed and what the method of the next adjustment will be based on the output power feedback from the power amplifier.

In an exemplary embodiment, the transmit power adjustment method further includes an operation S208 of adjusting operation states of (one or more) secondary receiving antennas of the terminal according to the carrier-to-noise spectral density ratio. Specifically, the terminal device may include one primary receiving antenna and at least one secondary receiving antenna.

In the related art, due to the use of circularly polarized antennas by satellites and the use of linearly polarized antennas by terminal equipment, there is a polarization loss of 3dB when the linearly polarized antennas of terminal equipment receive signals from the circularly polarized antennas of satellites. Additionally, different satellites have different orbits, including factors such as height and angle, thus imposing varying requirements on antenna design. While maintaining sufficient gain, there are also certain requirements for the directivity of the receiving antenna. GEO satellites, with their fixed positions and angles, require better antenna directivity from the terminal, with more concentrated radiation and higher gain in the direction of maximum radiation. Terminal equipment can be aligned with the satellite via software functions to receive and transmit signals. For LEO satellites, which are constantly moving in the sky, the design of the terminal antenna requires high gain in the upper hemisphere.

Through the embodiment of the present disclosure, dynamic selection of receiving antennas in downlink communication between satellites and terminal equipment can be achieved, thereby overcoming the design challenges associated with receiving antennas and simultaneously meeting the design requirements for gain and directivity.

In this embodiment, operation S208 may specifically include: determining, from multiple carrier-to-noise spectral density ratio intervals that do not overlap with each other, a target carrier-to-noise spectral density ratio interval in which the carrier-to-noise spectral density ratio falls, wherein the multiple carrier-to-noise spectral density ratio intervals correspond to different numbers of secondary receiving antennas to be enabled; and adjusting the operation states of the secondary receiving antennas according to a number of secondary receiving antennas to be enabled corresponding to the target carrier-to-noise spectral density ratio interval.

Furthermore, different carrier-to-noise spectral density ratios correspond to different satellite signal strengths (or satellite distances), requiring the pre-setting of multiple non-overlapping carrier-to-noise spectral density ratio intervals (i.e., satellite signal strength intervals). The number of secondary receiving antennas to be enabled is determined based on the carrier-to-noise spectral density ratio interval in which the current satellite signal strength falls. Specifically, the greater the carrier-to-noise spectral density ratio, the stronger the signal, and the fewer the number of secondary receiving antennas needed to be enabled; conversely, the smaller the carrier-to-noise spectral density ratio, the weaker the signal, and the more secondary receiving antennas are required to be enabled.

In this embodiment, before operation S202, the transmit power adjustment method may further include: setting one or more thresholds within a preset carrier-to-noise spectral density ratio range according to the number of the secondary receiving antennas, wherein the number of the secondary receiving antennas is equal to a number of the one or more thresholds; and determining, according to the one or more thresholds, the multiple carrier-to-noise spectral density ratio intervals and the corresponding numbers of secondary receiving antennas to be enabled.

Furthermore, the preset carrier-to-noise spectral density ratio range may be set based on the values of the carrier-to-noise spectral density ratios actually detected, or the basis for setting the carrier-to-noise spectral density ratio range may be unrestricted. The upper and/or lower limits of the carrier-to-noise spectral density ratio intervals are the above set thresholds. With N thresholds, N+1 intervals can be delineated. The intervals are arranged from largest to smallest, with the corresponding numbers of secondary receiving antennas to be enabled increasing by 1 sequentially from 0 (for example, 0, 1, ..., N).

In an exemplary implementation, with only one secondary receiving antenna and one threshold, the range greater than that threshold may be set as the first interval, with the corresponding number of secondary receiving antennas to be enabled being 0; and the range less than that threshold may be set as the second interval, with the corresponding number of secondary receiving antennas to be enabled being 1.

In an exemplary implementation, a higher carrier-to-noise spectral density ratio may represent a stronger signal strength of the downlink satellite signal received, a closer distance between the satellite and the terminal equipment, and a smaller number of secondary antennas needed to be enabled.

In an exemplary embodiment, operation S208 may include the following operations S2080 to S2088.

In operation S2080, in a case where the number of the secondary receiving antennas is equal to N, the thresholds include a first threshold, a second threshold, till an Nth threshold, wherein the first threshold, the second threshold, till the Nth threshold successively decrease, and N is an integer greater than or equal to 2.

In operation S2082, the carrier-to-noise spectral density ratio is compared with the first threshold till the Nth threshold respectively.

In operation S2084, in a case where the carrier-to-noise spectral density ratio is greater than the first threshold, the operation states of all the secondary receiving antennas are adjusted to disabled states.

In operation S2086, in a case where the carrier-to-noise spectral density ratio is less than an n-th threshold and greater than an (n+1)-th threshold, the operation states of n secondary receiving antennas are adjusted to enabled states, and the operation states of remaining N-n secondary receiving antennas are adjusted to disabled states, wherein n is a positive integer less than N.

In operation S2088, in a case where the carrier-to-noise spectral density ratio is less than the Nth threshold, the operation states of all the secondary receiving antennas are adjusted to enabled states.

Furthermore, in operation S2084, being greater than the first threshold corresponds to the carrier-to-noise spectral density ratio intervals determined based on the thresholds in the aforementioned embodiments, and the operation states of all secondary receiving antennas being adjusted to disabled states means that the number of secondary receiving antennas to be enabled is 0. Other intervals and corresponding numbers of secondary receiving antennas to be enabled may be inferred similarly.

In an exemplary embodiment, the operation S2086 of adjusting the operation states of n secondary receiving antennas to enabled states and adjusting the operation states of the remaining N-n secondary receiving antennas to disabled states may involve the selection and enablement of the n secondary receiving antennas with the best CN0 values after combining. This method specifically includes: forming a plurality of antenna groups from the N secondary receiving antennas, wherein each of the plurality of antenna groups includes any n different secondary receiving antennas; sequentially controlling each of the plurality of antenna groups to be separately enabled, and recording a carrier-to-noise spectral density ratio corresponding to each of the plurality of antenna groups; determining an antenna group having a largest carrier-to-noise spectral density ratio among the plurality of antenna groups as a target antenna group; and adjusting the operation states of the n secondary receiving antennas in the target antenna group to the enabled states, and adjusting the operation states of N-n secondary receiving antennas other than the n secondary receiving antennas in the target antenna group to the disabled states.

In another embodiment, a case where the terminal equipment includes one primary receiving antenna and three secondary receiving antennas is taken as an example, the first threshold is set as C1, the second threshold is set as C2, and the third threshold is set as C3. The primary receiving antenna is an antenna with the best reception performance and position among the four antennas and is always in an active state, while the three secondary receiving antennas may operate in a manner that the three secondary receiving antennas are active simultaneously, or none of the three secondary receiving antennas is active, or only one or more of the three secondary receiving antennas are active.

In an exemplary embodiment of the present disclosure, the number of secondary receiving antennas to be enabled and which ones to enable are determined based on the CN0 value of the primary receiving antenna, and this process may include one or more of the following scenarios.

Scenario One: When the carrier-to-noise spectral density ratio CN0 of the primary receiving antenna is greater than C1, indicating a strong signal environment, the primary receiving antenna continues to operate, and no secondary receiving antennas need to be enabled. If any secondary receiving antennas are already enabled, all the secondary receiving antenna paths are disabled.

Scenario Two: When the carrier-to-noise spectral density ratio CN0 of the primary receiving antenna satisfies C2 < CN0 < C1, indicating that the satellite signal has weakened below the first threshold, if only the primary receiving antenna is operating, the satellite communication chip of the terminal equipment may sequentially control the enablement of the first, second, and third secondary receiving antennas, recording the CN0 values (CN01, CN02, CN03) when the primary receiving antenna is operating with the first, second, and third secondary receiving antennas, respectively. The sizes of CN01, CN02, and CN03 are compared, and the secondary receiving antenna (and receiving channel) with the largest carrier-to-noise spectral density ratio is enabled. The primary receiving antenna and this secondary receiving antenna will operate simultaneously to enhance the overall CN0 value. If the primary receiving antenna is operating with one or two secondary receiving antennas, the operating secondary receiving antennas are first disabled and then the above process is repeated to ensure that the primary receiving antenna operates together with the secondary receiving antenna providing the best reception.

Scenario Three: When the carrier-to-noise spectral density ratio CN0 of the primary receiving antenna satisfies C3 < CN0 < C2, the process is similar to Scenario Two, regardless of how many antennas are currently operating, the two secondary receiving antennas (and receiving channels) with the largest CN0 when combined with the primary receiving antenna are selected from the three secondary receiving antennas.

Scenario Four: When the carrier-to-noise spectral density ratio CN0 of the primary receiving antenna is less than C3, regardless of the current operating state of the primary and secondary receiving antennas, all three secondary receiving antennas are controlled to be enabled simultaneously to enhance reception performance.

Furthermore, the number of secondary receiving antennas in this embodiment of the present disclosure is not limited to three. The quantity of antennas and downlink paths can be increased based on the actual space available in the terminal equipment, and dynamic adjustments to the receiving antennas may be further made according to the methods described in operations S2080 to S2088.

In an embodiment, after operation S208, the transmit power adjustment method may further include: starting a timer or a counter, and not performing adjustment on the secondary receiving antenna within a preset time or a preset number of times of receiving the satellite signals. This method may effectively prevent a ping-pong effect, i.e., preventing the secondary receiving antenna from being disabled and enabled continuously.

In the embodiments of the present disclosure, by dynamically adjusting the satellite communication receiving antennas, it is possible to ensure the reception performance of the satellite communication downlink channel in different environments, overcoming the deterioration of the downlink channel caused by different weather conditions, various satellite orbits, and the circular polarization loss of the satellite. At the same time, dynamically adjusting the receiving antennas can also save power consumption of the terminal equipment.

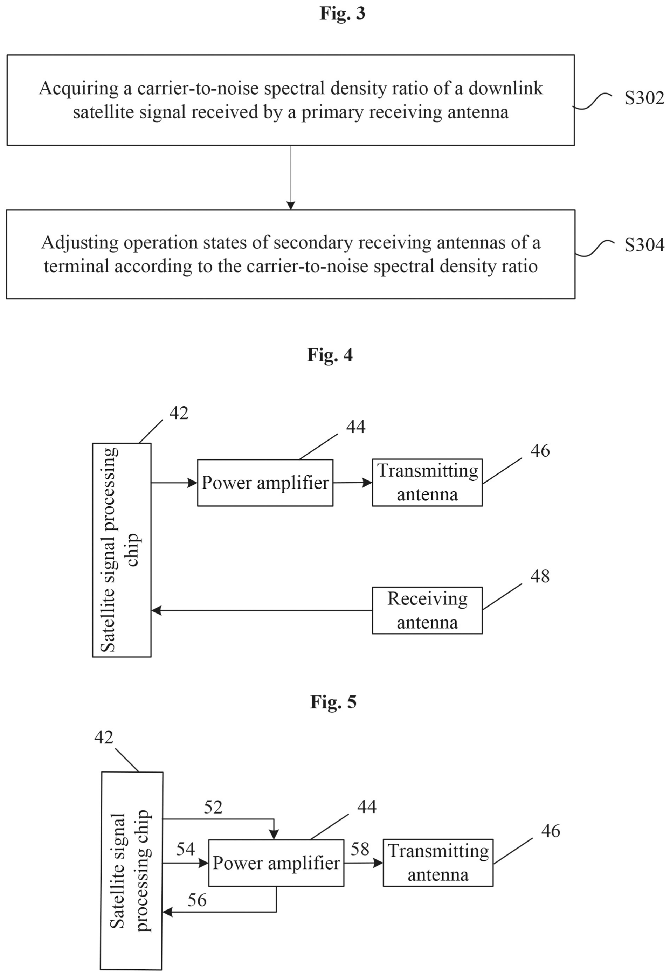

Fig. 3 is a flowchart of a receiving antenna adjustment method according to an embodiment of the present disclosure. As shown in Fig. 3, the transmit power adjustment method specifically includes the following operations S302 and S304.

In operation S302, a carrier-to-noise spectral density ratio of a downlink satellite signal received by a primary receiving antenna is acquired.

In operation S304, operation states of one or more secondary receiving antennas of a terminal are adjusted according to the carrier-to-noise spectral density ratio.

In this embodiment of the present disclosure, by operations S302 to S304, satellite downlink communication can be optimized independently, ensuring the reception performance of the satellite communication downlink channel in various environments while also conserving terminal power consumption.

In an embodiment, the satellite communication chip in the terminal equipment can also control the enablement or disablement of the receiving channels, with each receiving antenna connected to a receiving port of the satellite communication chip via a receiving channel. The selection of receiving channels by the satellite communication chip is similar to the selection of secondary receiving antennas in the aforementioned embodiment, where the primary receiving channel corresponds to the primary receiving antenna and is always active, and each secondary receiving channel corresponds to each secondary receiving antenna. Multiple secondary receiving channels may be enabled or disabled simultaneously, or a selection (part) of the multiple secondary receiving channels may be enabled or disabled as needed.

Fig. 4 is a schematic structural diagram of a satellite communication terminal according to an embodiment of the present disclosure. As shown in Fig. 4, the satellite communication terminal specifically includes the following structure:
a satellite signal processing chip 42, a power amplifier 44, a transmitting antenna 46 and a receiving antenna 48.

In the present embodiment, the receiving antenna 48 includes a primary receiving antenna which is configured to receive a downlink satellite signal.

Further, the receiving antenna 48 may further include one or more secondary receiving antennas, configured to assist the primary receiving antenna in receiving the downlink satellite signal, wherein the number of the secondary receiving antennas is greater than or equal to 1.

In this embodiment, the satellite signal processing chip 42 is configured to acquire a carrier-to-noise spectral density ratio of a downlink satellite signal received by the primary receiving antenna, determine a transmission success rate of uplink information, and control adjustment of the uplink signal transmit power of the transmitting antenna 46 according to the carrier-to-noise spectral density ratio and the transmission success rate.

In this embodiment, the power amplifier 44 is configured to adjust the uplink signal transmit power under the control of the satellite signal processing chip 42.

In this embodiment, the gain of the power amplifier 44 should be high enough, at least over 40dB, the output power and saturation power of the power amplifier 44 should also be high enough, at least over 41dBm, the Power Added Efficiency (PAE) is over 40%, the transmitting vector amplitude error reaches about 3%, and the maximum input power of the power amplifier 44 may reach over 5dBm.

In this embodiment of the present disclosure, the received signal needs to be demodulated on the terminal equipment, and the satellite signal processing chip can measure the strength of the CN0 of the received signal. The satellite signal processing chip provides feedback of the CN0 of the received signal to the terminal equipment. Users can view the magnitude and changes of the CN0 of the received signal in real-time on a display module of the terminal equipment. Due to the presence of the primary receiving antenna, the terminal equipment may receive satellite signals in real-time. For a given uplink communication, after each transmission of uplink information, the satellite sends an acknowledgment character to the terminal equipment. By collecting and counting these acknowledgment characters over a certain period or multiple uplink communications, the transmission success rate of the uplink information can be determined.

Fig. 5 is a schematic structural diagram of an uplink channel of a satellite communication terminal according to an embodiment of the present disclosure. As shown in Fig. 5, the uplink path of the satellite communication terminal includes the following structure:
an amplifier control path 52, an amplifier input path 54, an amplifier feedback path 56, and an amplifier output path 58.

In this embodiment, the power amplifier and the satellite signal processing chip are connected through the amplifier control path 52, the amplifier input path 54, and the amplifier feedback path 56.

In this embodiment, the power amplifier and the transmitting antenna are connected through the amplifier output path 58.

Further, the signal output by the power amplifier is transmitted from the transmitting antenna through the amplifier output path 58.

In this embodiment, the amplifier control path 52 controls the power amplifier to be a high power amplifier with a linear amplification and a constant gain.

In this embodiment, the satellite signal processing chip may adjust the input signal in the amplifier input path 54, adjust the input of the amplifier according to the value of CN0 of the primary receiving antenna, increase the input power of the amplifier when the value of CN0 decreases, and decrease the input power of the amplifier when the value of CN0 increases.

Further, the transmit power needs to be adjusted dynamically by comprehensively considering the CN0 and the transmission success rate.

Specifically, according to industry equipment requirements, the terminal output power of satellite equipment needs to reach 37dBm, and the amplifier output is P1. At this point, the CN0 value of the primary receiving antenna is N1, and the information transmission success rate is E1, which is within a preset transmission success rate range, and E1 may also be a preset value, i.e., a lower limit of the transmission success rate range. After a certain period of time or number of communications, it is found that the CN0 of the primary receiving antenna becomes N2, with N2 < N1, and the information transmission success rate E2 < E1. At this time, the amplifier output is increased to P2, and then the information transmission success rate is monitored for a certain period. If the information transmission success rate gradually increases and is greater than or equal to the preset value, it indicates that the power adjustment is successful. Similarly, after a certain period of time or number of communications, if it is found that the CN0 value N3 > N1, and the information transmission success rate E3 > E1, the output power of the power amplifier is decreased to P3. After a certain period of time or number of communications, if the information transmission success rate is still greater than or equal to the preset value, it indicates that the power adjustment is successful. This embodiment adjusts the transmit power based on the CN0 value while ensuring the information transmission success rate, which can reduce the power consumption of the transmission end.

In this embodiment, the amplifier feedback path 56 may feedback the output power of the power amplifier to the satellite signal processing chip, and based on the magnitude of the feedback power, the satellite signal processing chip determines the direction of the next power adjustment.

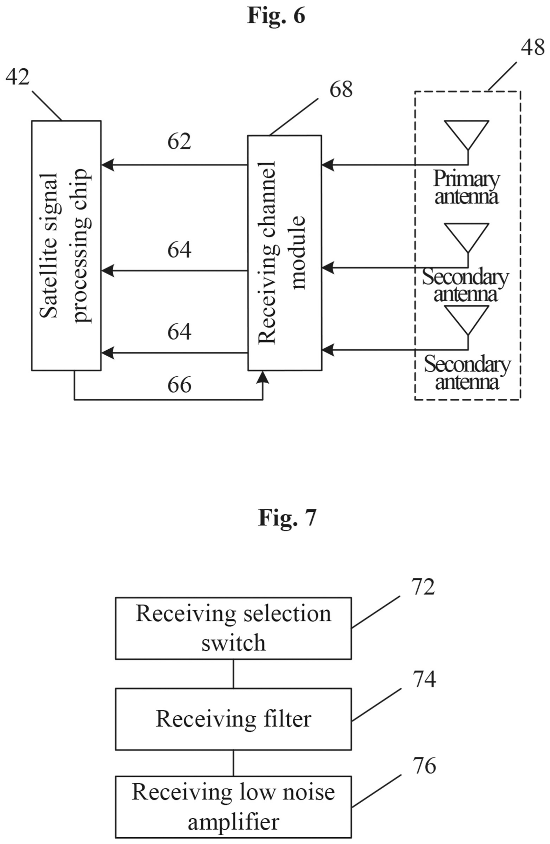

Fig. 6 is a schematic structural diagram of a downlink channel of a satellite communication terminal according to an embodiment of the present disclosure. As shown in Fig. 6, the downlink path further includes the following structure:
a primary receiving channel 62, a secondary receiving channel 64, a receiving control path 66, and a receiving channel module 68.

In this embodiment, the receiving antenna 48 may specifically include one primary antenna and at least one secondary antenna. The primary receiving channel 62 is configured to connect a receiving port of the satellite signal processing chip to the primary antenna, and the secondary receiving channel 64 is configured to connect each secondary antenna to a receiving port of a different satellite signal processing chip.

In the present embodiment, the receiving channel module is configured to adjust the operation state of the secondary receiving antenna under the control of the satellite signal processing chip, wherein the operation state includes enabled and disabled. Further, the satellite signal processing chip is further configured to instruct, according to the carrier-to-noise spectral density ratio, the receiving channel module to adjust the operation state of the secondary receiving antenna.

In this embodiment of the present disclosure, the satellite signal processing chip controls the receiving channel module 68 through the receiving control path 66, controls the selection of receiving channels to be enabled and receiving channels to be disabled, and controls the selections among the receiving paths.

Furthermore, satellites in the sky are in constant motion, with the distance between the satellite and terminal equipment continuously changing. Additionally, due to weather conditions, the losses in the satellite uplink paths vary under different environments such as clear and cloudy days. In this embodiment of the present disclosure, by dynamically adjusting the satellite communication receiving paths, it ensures the reception performance of the satellite communication downlink paths in various environments, overcoming the degradation of the downlink paths caused by different weather conditions, various satellite orbits, and circular polarization losses of the satellite. At the same time, dynamic adjustments of the downlink paths save terminal power consumption. Dynamic adjustment of antennas can be carried out among multiple antennas, better enhancing the reception capability of the terminal equipment under weak signal conditions.

Fig. 7 is a schematic structural block diagram of a receiving channel module according to an embodiment of the present disclosure. As shown in Fig. 7, the receiving channel module may include the following structures:
a receiving selection switch 72, a receiving filter 74, and a receiving low noise amplifier 76.

In this embodiment of the present disclosure, the receiving selection switch 72 is configured to control the enablement or disablement of each secondary receiving path under the control of the receiving control path 66.

In this embodiment of the present disclosure, the receiving low noise amplifier 76 may be a Low-Noise Amplifier (LNA) 76. The receiving filter 74 and the receiving low noise amplifier 76 are used for filtering and amplifying the downlink satellite communication signals.

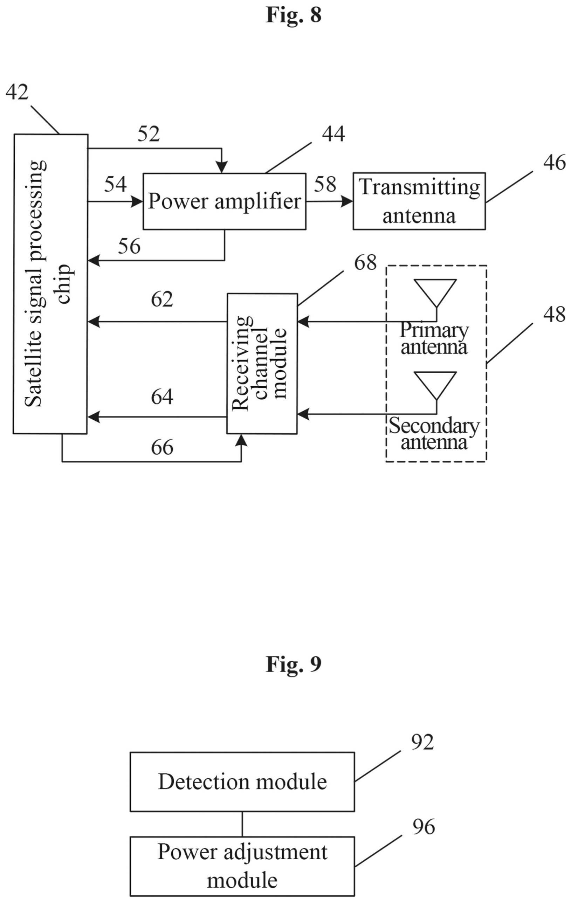

Fig. 8 is a schematic diagram of an overall structure of a satellite communication terminal according to an embodiment of the present disclosure. As shown in Fig. 8, the satellite communication terminal may simultaneously include the structures of the uplink path and the downlink path described in the aforementioned embodiments.

In this embodiment of the present disclosure, the satellite signal processing chip may perform the operations of any of the method embodiments described above.

Through the embodiment of the present disclosure, it is possible to achieve dynamic adjustment of the power in the uplink path, effectively solving the problem of balancing the uplink transmit power with the information transmission success rate in satellite communication. It also enables dynamic adjustment of the downlink receiving path in satellite communication, ensuring the reception performance of the downlink channel in different environments, and reducing the power consumption of terminal equipment from both the uplink and downlink communication perspectives.

According to another aspect of the embodiments of the present disclosure, a transmit power adjustment apparatus is also provided, which is applied to a terminal.

Fig. 9 is a schematic block diagram of a transmit power adjustment apparatus according to an embodiment of the present disclosure. As shown in Fig. 9, the apparatus may specifically include the following structure:
a detection module 92, configured to acquire a carrier-to-noise spectral density ratio of a primary receiving antenna; and
a power adjustment module 96, configured to adjust an uplink signal transmit power according to the carrier-to-noise spectral density ratio.

In an exemplary embodiment, the apparatus further includes: an antenna adjustment module 98, configured to adjust operation states of secondary receiving antennas of the terminal according to the carrier-to-noise spectral density ratio, wherein a number of the secondary receiving antennas is greater than or equal to 1.

In an exemplary embodiment, the power adjustment module 96 is further configured to adjust the uplink signal transmit power from P1 to P2 in a case where the carrier-to-noise spectral density ratio decreases, wherein P1 is less than P2; or adjust the uplink signal transmit power from P1 to P3 in a case where the carrier-to-noise spectral density ratio increases, wherein P1 is greater than P3.

In an exemplary embodiment, the power adjustment module 96 may include the following structure:
a determination module, configured to determine a transmission success rate of uplink information; and
an adjustment module, configured to adjust the uplink signal transmit power according to the carrier-to-noise spectral density ratio and the transmission success rate.

In an exemplary embodiment, the determination module may include the following structure:
a first counting unit, configured to count the number of transmissions of the uplink information within a preset time period or a preset number of communications;
a receiving unit, configured to receive acknowledgement characters returned by a satellite after receiving the uplink information;
a second counting unit, configured to count the number of successes of the uplink information according to the acknowledgement characters; and
a determining unit, configured to determine a ratio of the number of successes to the number of transmissions of the uplink information as the transmission success rate.

In an embodiment, the adjustment module may include at least one of:
a power increasing unit, configured to adjust the uplink signal transmit power from P1 to P2 in a case where the carrier-to-noise spectral density ratio decreases and the transmission success rate is less than a preset value, wherein P1 is less than P2; and
a power decreasing unit, configured to adjust the uplink signal transmit power from P1 to P3 in a case where the carrier-to-noise spectral density ratio increases and the transmission success rate is greater than the preset value, wherein P1 is greater than P3.

In an embodiment, the power increasing unit is further configured to adjust the uplink signal transmit power from P1 to P2 by increasing an input power of the power amplifier.

In an embodiment, the power decreasing unit is further configured to adjust the uplink signal transmit power from P1 to P3 by decreasing the input power of the power amplifier.

In an exemplary embodiment, the determination module is further configured to determine a transmission success rate of the uplink information after the power adjustment module 96 adjusts the uplink signal transmit power according to the carrier-to-noise spectral density ratio; in a case where the transmission success rate is greater than or equal to a preset value, determine that adjustment of the uplink signal transmit power succeeds; or in a case where the transmission success rate is less than the preset value, determine that the adjustment of the uplink signal transmit power fails.

In an exemplary embodiment, the adjustment module is further configured to continue to adjust the uplink signal transmit power in a case where the adjustment of the uplink signal transmit power fails, including: adjusting the uplink signal transmit power according to the transmission success rate; or adjusting the uplink signal transmit power according to the carrier-to-noise spectral density ratio; or adjusting the uplink signal transmit power according to the carrier-to-noise spectral density ratio and the transmission success rate.

In an exemplary embodiment, the power adjustment module 96 is further configured to acquire an output power fed back by a power amplifier; and determine an adjustment manner for next adjustment of the uplink signal transmit power according to the output power and a preset target output power range, wherein the adjustment manner includes increasing the uplink signal transmit power and decreasing the uplink signal transmit power.

In an embodiment, the antenna adjustment module 98 includes:
an antenna determination unit, configured to determine, from multiple carrier-to-noise spectral density ratio intervals that do not overlap with each other, a target carrier-to-noise spectral density ratio interval in which the carrier-to-noise spectral density ratio falls, wherein the multiple carrier-to-noise spectral density ratio intervals correspond to different numbers of secondary receiving antennas to be enabled; and
an antenna adjustment unit, configured to adjust the operation states of the secondary receiving antennas according to a number of secondary receiving antennas to be enabled corresponding to the target carrier-to-noise spectral density ratio interval.

In another exemplary embodiment, the antenna adjustment module 98 further includes:
a setting unit, which is configured to set one or more thresholds within a preset carrier-to-noise spectral density ratio range according to the number of the secondary receiving antennas, wherein the number of the secondary receiving antennas is equal to a number of the one or more thresholds; and determine, according to the one or more thresholds, the multiple carrier-to-noise spectral density ratio intervals and the corresponding numbers of secondary receiving antennas to be enabled.

Further, in a case where the number of the secondary receiving antennas is equal to N, the thresholds include a first threshold, a second threshold, till an Nth threshold, wherein the first threshold, the second threshold, till the Nth threshold successively decrease, and N is an integer greater than or equal to 2.

In another exemplary embodiment, the antenna adjustment module 98 further includes:
a comparison unit, configured to respectively compare the carrier-to-noise spectral density ratio with the first threshold till the Nth threshold respectively;
a first adjustment unit, configured to adjust, in a case where the carrier-to-noise spectral density ratio is greater than the first threshold, the operation states of all the secondary receiving antennas to disabled states;
a second adjustment unit, configured to, in a case where the carrier-to-noise spectral density ratio is less than an n-th threshold and greater than an (n+1)-th threshold, adjust the operation states of n secondary receiving antennas to enabled states, and adjust the operation states of remaining N-n secondary receiving antennas to disabled states, wherein n is a positive integer less than N;
a third adjustment unit, configured to adjust, in a case where the carrier-to-noise spectral density ratio is less than the Nth threshold, the operation states of all the secondary receiving antennas to enabled states.

In the embodiment, the second adjustment unit is further configured to form a plurality of antenna groups from the N secondary receiving antennas, wherein each of the plurality of antenna groups includes any n different secondary receiving antennas; sequentially control each of the plurality of antenna groups to be separately enabled, and record a carrier-to-noise spectral density ratio corresponding to each of the plurality of antenna groups; determine an antenna group having a largest carrier-to-noise spectral density ratio among the plurality of antenna groups as a target antenna group; and adjust the operation states of the n secondary receiving antennas in the target antenna group to the enabled states, and adjust the operation states of N-n secondary receiving antennas other than the n secondary receiving antennas in the target antenna group to the disabled states.

The embodiments of the present disclosure may be applied to a terminal device such as a terminal module, a handheld terminal, a portable terminal and a vehicle-mounted terminal. When the device space is large enough, the number of downlink paths and antennas can be increased according to the device space.

Through the embodiments of the present disclosure, dynamic adjustment of transmit power and the number of receiving antennas has been achieved, which can reduce device power consumption and extend device battery life. The solution also ensures the reception performance of weak signals and overcomes the impact of polarization loss in satellite communication on the downlink path.

The embodiments of the present disclosure further provide a computer-readable storage medium. The computer-readable storage medium stores a computer program, and the computer program, when run by a processor, causes the processor to execute operations in any one of the foregoing method embodiments.

In an exemplary embodiment, the computer-readable storage medium may include, but is not limited to, any medium that can store a computer program, such as a Universal Serial Bus (USB) flash drive, a Read-Only Memory (ROM), a Random Access Memory (RAM), a removable hard disk, a magnetic disk, or an optical disc.

The embodiments of the present disclosure further provide an electronic apparatus, including a memory and a processor, wherein the memory stores a computer program, and the processor is configured to run the computer program so as to execute operations in any one of the method embodiments.

In an exemplary embodiment, the electronic apparatus may further include a transmission device and an input/output device, wherein the transmission device is connected to the processor, and the input/output device is connected to the processor.

For exemplary embodiments in this embodiment, reference may be made to the embodiments described in the foregoing embodiments and exemplary embodiments, and details are not repeatedly described in this embodiment.

Obviously, those having ordinary skill in the art should understand that each module or each operation of the present disclosure can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus. Furthermore, in some cases, the shown or described operations may be executed in an order different from that described here, or are made into integrated circuit modules respectively, or a plurality of modules or operations therein are made into a single integrated circuit module for implementation. As such, the present disclosure is not limited to any particular hardware and software combination.

The foregoing descriptions are merely exemplary embodiments of the present disclosure, but are not intended to limit the present disclosure. For those having ordinary skill in the art, the present disclosure may have various modifications and variations. Any modifications, equivalent replacements, improvements and the like made within the principle of the present disclosure shall fall within the scope of protection of the present disclosure.

## Claims

1. A transmit power adjustment method applied to a terminal, wherein the transmit power adjustment method comprises:
acquiring a carrier-to-noise spectral density ratio of a primary receiving antenna; and
adjusting an uplink signal transmit power according to the carrier-to-noise spectral density ratio.

2. The transmit power adjustment method according to claim 1, wherein adjusting the uplink signal transmit power according to the carrier-to-noise spectral density ratio comprises:
determining a transmission success rate of uplink information; and
adjusting the uplink signal transmit power according to the carrier-to-noise spectral density ratio and the transmission success rate.

3. The transmit power adjustment method according to claim 2, wherein adjusting the uplink signal transmit power according to the carrier-to-noise spectral density ratio and the transmission success rate comprises:
adjusting the uplink signal transmit power from P1 to P2 in a case where the carrier-to-noise spectral density ratio decreases and the transmission success rate is less than a preset value, wherein P1 is less than P2; or
adjusting the uplink signal transmit power from P1 to P3 in a case where the carrier-to-noise spectral density ratio increases and the transmission success rate is greater than the preset value, wherein P1 is greater than P3.

4. The transmit power adjustment method according to claim 3, wherein
adjusting the uplink signal transmit power from P1 to P2 in the case where the carrier-to-noise spectral density ratio decreases and the transmission success rate is less than the preset value comprises: adjusting the uplink signal transmit power from P1 to P2 by increasing an input power of a power amplifier; or
adjusting the uplink signal transmit power from P1 to P3 in a case where the carrier-to-noise spectral density ratio increases and the transmission success rate is greater than the preset value comprises: adjusting the uplink signal transmit power from P1 to P3 by decreasing the input power of the power amplifier.

5. The transmit power adjustment method according to claim 1, wherein after adjusting the uplink signal transmit power according to the carrier-to-noise spectral density ratio, the transmit power adjustment method further comprises:
determining a transmission success rate of uplink information;
in a case where the transmission success rate is greater than or equal to a preset value, determining that adjustment of the uplink signal transmit power succeeds; or
in a case where the transmission success rate is less than the preset value, determining that the adjustment of the uplink signal transmit power fails, and continuing to adjust the uplink signal transmit power;
wherein continuing to adjust the uplink signal transmit power comprises:
adjusting the uplink signal transmit power according to the transmission success rate; or
adjusting the uplink signal transmit power according to the carrier-to-noise spectral density ratio; or
adjusting the uplink signal transmit power according to the carrier-to-noise spectral density ratio and the transmission success rate.

6. The transmit power adjustment method according to claim 1, further comprising:
acquiring an output power fed back by a power amplifier; and
determining an adjustment manner for next adjustment of the uplink signal transmit power according to the output power and a preset target output power range, wherein the adjustment manner comprises increasing the uplink signal transmit power and decreasing the uplink signal transmit power.

7. The transmit power adjustment method according to claim 1, further comprising:
adjusting operation states of secondary receiving antennas of the terminal according to the carrier-to-noise spectral density ratio, wherein a number of the secondary receiving antennas is greater than or equal to 1.

8. The transmit power adjustment method according to claim 7, wherein adjusting the operation states of the secondary receiving antennas of the terminal according to the carrier-to-noise spectral density ratio comprises:
determining, from multiple carrier-to-noise spectral density ratio intervals that do not overlap with each other, a target carrier-to-noise spectral density ratio interval in which the carrier-to-noise spectral density ratio falls, wherein the multiple carrier-to-noise spectral density ratio intervals correspond to different numbers of secondary receiving antennas to be enabled; and
adjusting the operation states of the secondary receiving antennas according to a number of secondary receiving antennas to be enabled corresponding to the target carrier-to-noise spectral density ratio interval.

9. The transmit power adjustment method according to claim 8, wherein before acquiring the carrier-to-noise spectral density ratio of a downlink satellite signal received by the primary receiving antenna, the transmit power adjustment method further comprises:
setting one or more thresholds within a preset carrier-to-noise spectral density ratio range according to the number of the secondary receiving antennas, wherein the number of the secondary receiving antennas is equal to a number of the one or more thresholds; and
determining, according to the one or more thresholds, the multiple carrier-to-noise spectral density ratio intervals and the corresponding numbers of secondary receiving antennas to be enabled.

10. The transmit power adjustment method according to claim 9, wherein adjusting the operation states of the secondary receiving antennas of the terminal according to the carrier-to-noise spectral density ratio comprises:
in a case where the number of the secondary receiving antennas is equal to N, the thresholds comprising a first threshold, a second threshold, till an Nth threshold, wherein the first threshold, the second threshold, till the Nth threshold successively decrease, and N is an integer greater than or equal to 2;
comparing the carrier-to-noise spectral density ratio with the first threshold till the Nth threshold respectively;
in a case where the carrier-to-noise spectral density ratio is greater than the first threshold, adjusting the operation states of all the secondary receiving antennas to disabled states;
in a case where the carrier-to-noise spectral density ratio is less than an n-th threshold and greater than an (n+1)-th threshold, adjusting the operation states of n secondary receiving antennas to enabled states, and adjusting the operation states of remaining N-n secondary receiving antennas to disabled states, wherein n is a positive integer less than N; and
in a case where the carrier-to-noise spectral density ratio is less than the Nth threshold, adjusting the operation states of all the secondary receiving antennas to enabled states.

11. The transmit power adjustment method according to claim 10, wherein adjusting the operation states of n secondary receiving antennas to the enabled states, and adjusting the operation states of remaining N-n secondary receiving antennas to the disabled states comprises:
forming a plurality of antenna groups from the N secondary receiving antennas, wherein each of the plurality of antenna groups comprises any n different secondary receiving antennas;
sequentially controlling each of the plurality of antenna groups to be separately enabled, and recording a carrier-to-noise spectral density ratio corresponding to each of the plurality of antenna groups;
determining an antenna group having a largest carrier-to-noise spectral density ratio among the plurality of antenna groups as a target antenna group; and
adjusting the operation states of the n secondary receiving antennas in the target antenna group to the enabled states, and adjusting the operation states of N-n secondary receiving antennas other than the n secondary receiving antennas in the target antenna group to the disabled states.

12. A terminal, comprising:
a primary receiving antenna, configured to receive a downlink satellite signal;
a satellite signal processing chip, configured to acquire a carrier-to-noise spectral density ratio of the primary receiving antenna, and control to adjust an uplink signal transmit power of a transmitting antenna according to the carrier-to-noise spectral density ratio; and
a power amplifier, configured to adjust the uplink signal transmit power under the control of the satellite signal processing chip.

13. The terminal according to claim 12, further comprising:
secondary receiving antennas, configured to assist the primary receiving antenna in receiving the downlink satellite signal, wherein a number of the secondary receiving antennas is greater than or equal to 1; and
a receiving channel module, configured to adjust operation states of the secondary receiving antennas under the control of the satellite signal processing chip;
wherein the satellite signal processing chip is further configured to instruct, according to the carrier-to-noise spectral density ratio, the receiving channel module to adjust the operation states of the secondary receiving antennas.

14. A computer-readable storage medium, wherein the computer-readable storage medium stores a computer program, and the computer program, when run by a processor, causes the processor to execute the transmit power adjustment method according to any one of claims 1 to 11.

15. An electronic apparatus, comprising a memory and a processor, wherein the memory stores a computer program, and the processor is configured to run the computer program so as to execute the transmit power adjustment method according to any one of claims 1 to 11.
